# EUROPEAN PATENT APPLICATION

(11) **EP 4 393 306 A1**
(43) Date of publication of application: **03.07.2024**
(21) Application number: 23220163.2
(22) Date of filing: 22.12.2023
(51) Int. Cl.: A21B 3/04, F22B 37/30, F24C 15/32

(54) **A WATER AND STEAM SEPARATION TANK FOR STEAM OVENS**

(30) Priority: 30.12.2022 TR 202221602
(71) Applicant: Arçelik Anonim Sirketi, 34445 Istanbul (TR)
(72) Inventor: AYTAN, ONUR, 34445 ISTANBUL (TR); ONAL, MUSTAFA, 34445 ISTANBUL (TR); ASKIN, UFUK, 34445 ISTANBUL (TR); OZDIL, OSMAN EREN, 34445 ISTANBUL (TR); BEYTER, ENGIN, 34445 ISTANBUL (TR)

(57) **Abstract**

The present invention relates to a separation tank (3) comprising a chamber (11) wherein water and steam are separated and which is defined by an upper wall (5), a lower wall (6), a rear wall (7), a front wall (8), a first side wall (9) and a second side wall (10); at least one inlet port (12) which is suitable for delivering liquid and/or steam into the separation tank (3) and which is connected to the surface of the first side wall (9); at least one steam discharge port (13) which is suitable for discharging steam from the separation tank (3) and which is connected to the surface of the second side wall (10); at least one water discharge port (14) which is suitable for discharging water from the separation tank (3) and which is connected to the lower wall (6); and at least one guiding wall (15) which is positioned in the chamber (11) in a position the liquid and/or steam delivered through the inlet port (12) hits, wherein a water discharge opening (16) is provided between the guiding wall (15) and the lower wall (6) to ensure that the separated water is delivered to the water discharge port (14).

## Description

### Technical Field

The present invention relates to a water and steam separation tank. The present invention particularly relates to a water and steam separation tank adapted for use in an oven which provides steam and clean cooking.

### State of the Art

Today, steam cooking has become very important as the technique of using steam in household ovens ensures the cooking of very tasty foodstuffs and preserves the nutrients naturally present in foodstuffs. The number of household ovens which has steam cooking function increases day by day. In the state of the art ovens, a steam generation system is arranged outside the oven cavity and the steam is injected into the oven cavity through one or more nozzles. Therefore, in the household ovens, it became necessary to control and deliver the steam to be sent into the oven.

Various methods are used in the state of the art to control a steam generation system of a household oven with steam cooking function. One of these is to activate the steam generator, and then detect the temperature in the steam generator. If there is no water in the steam generator, the steam generator remains active and the temperature peaks. In this scenario, the pumps are required to draw water from the beginning each time, which causes the cooking quality to decrease. Moreover, running out of water in the system causes problems such as the thermal relay breaking contact.

The failure to generate quality steam in steam ovens affects the cooking performance and taste of the foodstuffs. The first reason for this is that quality and homogeneous steam cannot be delivered into the oven from the steam generation system and the continuity of the steam transferred into the oven in a homogeneous regime cannot be ensured due to the water in the generator running out. The frequent turning on and turning off of the resistance in the steam generator due to the water in the system running out causes the risk of sticking in the relay contacts. Moreover, the amount of steam delivered into the oven per unit time is insufficient for the foodstuffs to be cooked. While the cooking time for some foodstuffs is very short, the amount of steam delivered to the system is not sufficient for foodstuffs which take a long time to ensure a delicious cooking.

Another problem encountered in the state of the art is that water and steam are sprayed in a mixed double phase from the nozzles which deliver steam into the oven, and quality steam output cannot be achieved. When the user opens the oven door to check the foodstuffs, the hot water coming from the nozzle may seriously harm the user. Hot water which contacts the skin poses a serious safety risk. Moreover, in the state of the art steam ovens, hot water which accumulates on the enameled casing base due to the double phase flow leaves traces of lime when it dries after cycles. While said lime marks are visually bad and difficult to clean, they can also leave unwanted permanent marks.

In the state of the art Patent Application No. US2010054717A1, a steam generator for an oven with steam cooking function is disclosed, which simplifies the configuration of a device required for generating steam and which can be detachably attached.

In order to solve all these problems encountered in the state of the art, a steam oven structure is needed which provides homogeneous, sufficient and single-phase steam delivery into the oven.

### The Aim of the Invention

The aim of the present invention is the realization of an oven which enables high quality and homogeneous steam to be delivered in a single phase through the nozzles which deliver steam into the oven.

Another aim of the present invention is the realization of an oven which increases the amount of steam per unit time to be delivered into the oven.

Another aim of the present invention is the realization of an oven which provides energy efficiency and operates safely by preventing the steam generation system from being constantly turned on and off.

Said figures are:

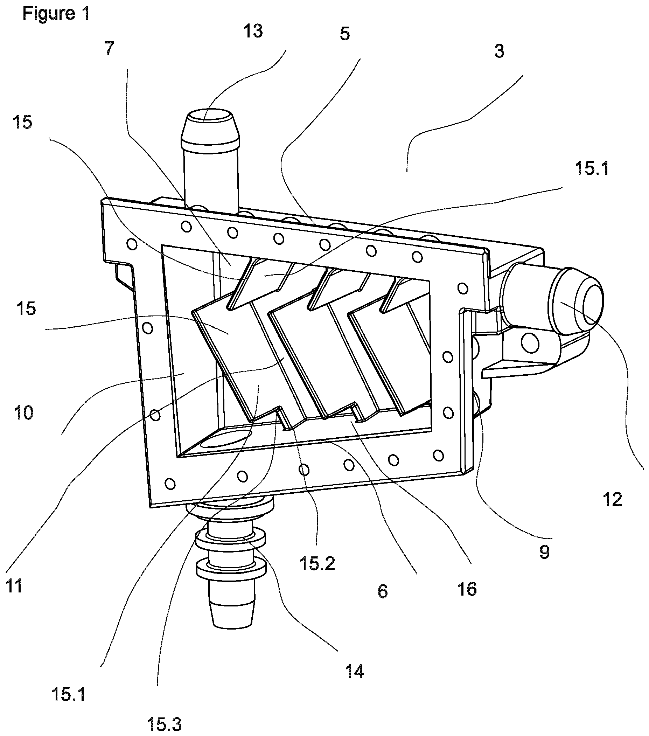

**Figure 1****:** is the front perspective view of the separation tank which provides the separation of water and steam.

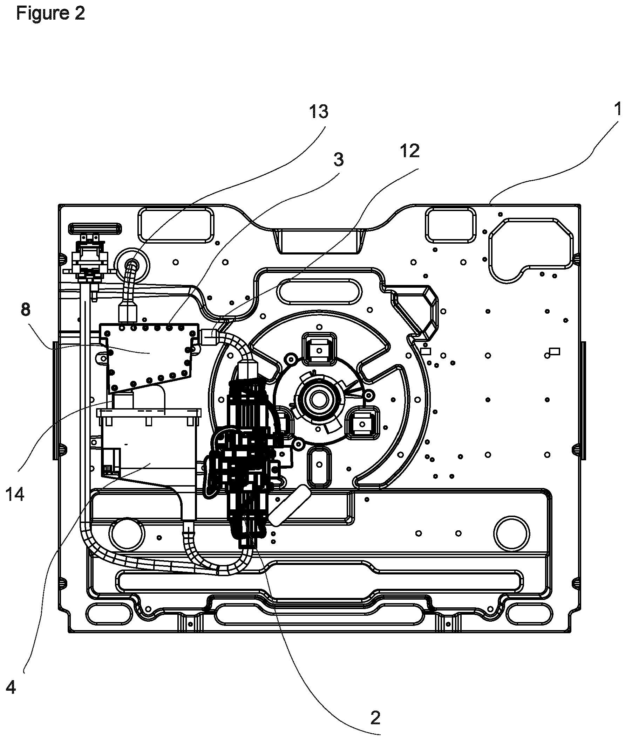

**Figure 2****:** is the top perspective view of an oven comprising the separation tank.

The following numerals are referred to in the description of the present invention:
- 1.: Oven
- 2.: Steam generator
- 3.: Separation tank
- 4.: Water tank
- 5.: Upper wall
- 6.: Lower wall
- 7.: Rear wall
- 8.: Front wall
- 9.: First side wall
- 10.: Second side wall
- 11.: Chamber
- 12.: Inlet port
- 13.: Steam discharge port
- 14.: Water discharge port
- 15.: Guiding wall
15.1 Surface
15.2 Lower edge
15.3 Gap
- 16.: Water discharge opening

### Detailed Description of the Invention

The present invention relates to a separation tank (3) which is used especially in steam ovens (1) and which ensures that the water and steam generated by the steam generator (2) and delivered in double phase are enabled to be delivered into the oven (1) only in steam phase and homogeneously.

In an embodiment of the present invention, the separation tank (3) comprises a chamber (11) wherein water and steam are separated and which is defined by an upper wall (5), a lower wall (6), a rear wall (7), a front wall (8), a first side wall (9) and a second side wall (10); at least one inlet port (12) which is suitable for delivering liquid and/or steam into the separation tank (3) and which is connected to the surface of the first side wall (9); at least one steam discharge port (13) which is suitable for discharging steam from the separation tank (3) and which is connected to the surface of the second side wall (10); at least one water discharge port (14) which is suitable for discharging water from the separation tank (3) and which is connected to the lower wall (6); and at least one guiding wall (15) which is positioned in the chamber (11) in a position the liquid and/or steam delivered through the inlet port (12) hits, wherein a water discharge opening (16) is provided between the guiding wall (15) and the lower wall (6) to ensure that the separated water is delivered to the water discharge port (14). In the water and steam mixture entering the separation tank (3) through the at least one inlet port (12), the water hits the guiding wall (15) as the phase with higher weight, falls onto the lower wall (6) due to the impact momentum and gravity, flows through the water discharge opening (16) and is discharged from the separation tank (3) through the at least one water discharge port (14). On the other hand, steam moves in the chamber (11) as a free-circulating gas and is discharged through the steam discharge port (13). Thus, a more homogeneous and higher amount of steam is discharged from the separation tank (3) per unit time.

In an embodiment of the present invention, the separation tank (3) comprises at least one guiding wall (15) which is positioned so as to extend from the upper wall (5) to the lower wall (6) in the chamber (11) and/or positioned in the chamber (11) so as to extend from the lower wall (6) to the upper wall (5) in a position the liquid and/or steam delivered through the inlet port (12) hits, wherein a water discharge opening (16) is provided between the guiding wall (15) and the lower wall (6) to ensure that the separated water is delivered to the water discharge port (14).

In an embodiment of the present invention, the at least one guiding wall (15) is positioned in the chamber (11) as connected to the upper wall (5) and/or rear wall (7) at least from one edge so as to extend from the upper wall (5) to the lower wall (6) and such that the angle between the upper wall (5) and a surface (15.1) thereof is between 90 degrees and 0 degrees, and there is a water discharge opening (16) between the guiding wall (15) and the lower wall (6) to ensure that the separated water is delivered to the water discharge port (14).

In an embodiment of the present invention, the at least one guiding wall (15) is positioned in the chamber (11) as connected to the lower wall (6) and/or rear wall (7) at least from one edge so as to extend from the lower wall (6) to the upper wall (5) and such that the angle between the upper wall (6) and a surface (15.1) thereof is between 90 degrees and 0 degrees, and there is a water discharge opening (16) between the guiding wall (15) and the lower wall (6) to ensure that the separated water is delivered to the water discharge port (14).

In an embodiment of the present invention, the separation tank (3) comprises at least two guiding walls (5) which extend in the chamber (11) from the upper wall (5) towards the lower wall (6) and from the lower wall (6) towards the upper wall (5) in a position the liquid and/or steam delivered through the inlet port (12) hits so as not to contact each other and so as to comprise an opening which enables the steam to move therebetween.

In an embodiment of the present invention, in order to provide the highest rate of water and steam separation ratio, the separation tank (3) comprises six guiding walls (5) which extend in the chamber (11) from three upper walls (5), which are positioned at certain intervals, towards the lower wall (6) and from three lower walls (6), positioned at certain intervals, towards the upper wall (5) so as not to contact each other and so as to comprise an opening which enables the steam to move therebetween.

In an embodiment of the present invention, the at least one guiding wall (15) is positioned on the lower wall (6) such that at least part of a lower edge (15.2) thereof is adjacent to the lower wall (6), and comprises a gap (15.3) so as to provide the water discharge opening (16) between said lower edge (15.2) and the lower wall (6).

In an embodiment of the present invention, the first side wall (9) and the second side wall (10) are positioned parallel to each other, and the lower wall (6) is connected to the first side wall (9) from one side and to the second side wall (10) from the other side.

In an embodiment of the present invention, the water discharge port (14) is in the form of a channel which is positioned on the lower wall (6) on the side of the lower wall (6) close to the second side wall (10) in order to discharge the water separated in the chamber (11).

In an embodiment of the present invention, the separation tank (3) comprises the first side wall (9) of which the edge connected to the at least one inlet port (12) has a flat surface and of which the edge joined with the lower wall (6) has a curved structure or a convex structure towards the lower wall (6). Thus, the water hitting the guiding walls (15) and falling towards the lower wall (6) in the chamber (11) due to impact and gravity is enabled to be discharged through the at least one water discharge port (14) connected to the lower wall (6) by means of the inclined surface of the first side wall (9).

In an embodiment of the present invention, the lower wall (6) extends by expanding at a certain angle from the edge thereof connected to the first side wall (9) towards the edge thereof connected to the second side wall (10) in order to enable the water separated in the chamber (11) to be discharged. Thus, the water hitting the guiding walls (15) and falling towards the lower wall (6) in the chamber (11) due to impact and gravity is enabled to be discharged through the at least one water discharge port (14) connected to the lower wall (6) by means of the inclined surface of the lower wall (6).

In an embodiment of the present invention, a steam oven (1) comprises a separator tank (3) which separates water and steam, which enables the separated water to be reused, and which transfers the separated steam into the oven (1) for steam cooking.

In an embodiment of the present invention, the oven (1) comprises a separation tank (3) wherein as the water bubbles and the water particles rise with the steam as a double phase flow when the water delivered to the steam generator (2) reaches boiling temperature, the water is delivered from the steam generator (2) through at least one inlet port (12)

In an embodiment of the present invention, the oven (1) comprises a water tank (4) which is positioned longitudinally and vertically so as to be parallel to the steam generator (2) and which is connected to the steam generator (2) by means of a connection member.

In an embodiment of the present invention, the oven (1) comprises a separation tank (3) which is positioned at a level higher than the steam generator (2) and water tank (4), which are positioned longitudinally and vertically so as to be parallel to each other, which is connected to the steam generator (2) by means of at least one inlet port (12), and to the water tank (4) by means of at least one water discharge port (14), and which separates the water and steam coming from the steam generator (2).

In an embodiment of the present invention, the boiling water and steam mixture in the steam generator (2) is delivered to the separation tank (3) through an inlet port (12). The water hits the guiding walls (15) in the separation tank (3) and falls towards the lower wall (6) so as to be delivered to the water discharge port (14) through the water discharge opening (16). The separated water is delivered to the water tank (4) through the water discharge port (14) to be reused. Meanwhile, the steam circulating freely in the chamber (11) is delivered into the oven (1) through the steam discharge port (13). Thus, while a continuous water supply is provided to the steam generator (2), high quality and homogeneous steam is delivered in a single phase through the nozzles which deliver steam into the oven (1).

## Claims

1. A separation tank (3) **comprising** a chamber (11) wherein water and steam are separated and which is defined by an upper wall (5), a lower wall (6), a rear wall (7), a front wall (8), a first side wall (9) and a second side wall (10); at least one inlet port (12) which is suitable for delivering liquid and/or steam into the separation tank (3) and which is connected to the surface of the first side wall (9); and at least one steam discharge port (13) which is suitable for discharging steam from the separation tank (3) and which is connected to the surface of the second side wall (10), **characterized by** at least one water discharge port (14) which is suitable for discharging water from the separation tank (3) and which is connected to the lower wall (6); and at least one guiding wall (15) which is positioned in the chamber (11) in a position the liquid and/or steam delivered through the inlet port (12) hits, wherein a water discharge opening (16) is provided between the guiding wall (15) and the lower wall (6) to ensure that the separated water is delivered to the water discharge port (14).

2. A separation tank (3) as in Claim 1, **characterized by** the at least one guiding wall (15) which is positioned so as to extend from the upper wall (5) to the lower wall (6) in the chamber (11) and/or positioned in the chamber (11) so as to extend from the lower wall (6) to the upper wall (5) in a position the liquid and/or steam delivered through the inlet port (12) hits, wherein a water discharge opening (16) is provided between the guiding wall (15) and the lower wall (6) to ensure that the separated water is delivered to the water discharge port (14).

3. A separation tank (3) as in Claim 1 or 2, **characterized by** the at least one guiding wall (15) which is positioned in the chamber (11) as connected to the upper wall (5) and/or rear wall (7) at least from one edge so as to extend from the upper wall (5) to the lower wall (6) and such that the angle between the upper wall (5) and a surface (15.1) thereof is between 90 degrees and 0 degrees.

4. A separation tank (3) as in any one of the above claims, **characterized by** the at least one guiding wall (15) which is positioned in the chamber (11) as connected to the lower wall (6) and/or rear wall (7) at least from one edge so as to extend from the lower wall (6) to the upper wall (5) and such that the angle between the upper wall (5) and a surface (15.1) thereof is between 90 degrees and 0 degrees.

5. A separation tank (3) as in any one of the above claims, **characterized by** the at least one guiding wall (15) which is positioned on the lower wall (6) such that at least part of a lower edge (15.2) thereof is adjacent to the lower wall (6), and which comprises a gap (15.3) so as to provide the water discharge opening (16) between said lower edge (15.2) and the lower wall (6).

6. A separation tank (3) as in any one of the above claims, **characterized by** at least two guiding walls (5) which extend in the chamber (11) from the upper wall (5) towards the lower wall (6) and from the lower wall (6) towards the upper wall (5) in a position the liquid and/or steam delivered through the inlet port (12) hits so as not to contact each other and so as to comprise an opening which enables the steam to move therebetween.

7. A separation tank (3) as in any one of the above claims, **characterized by** six guiding walls (5) which extend in the chamber (11) from three upper walls (5), which are positioned at certain intervals, towards the lower wall (6) and from three lower walls (6), positioned at certain intervals, towards the upper wall (5) so as not to contact each other and so as to comprise an opening which enables the steam to move therebetween.

8. A separation tank (3) as in any one of the above claims, wherein the first side wall (9) and the second side wall (10) thereof are positioned parallel to each other, and the lower wall (6) is connected to the first side wall (9) from one side and to the second side wall (10) from the other side.

9. A separation tank (3) as in any one of the above claims, comprising the water discharge port (14) in the form of a channel which is positioned on the lower wall (6) on the side of the lower wall (6) close to the second side wall (10) in order to discharge the water separated in the chamber (11).

10. A separation tank (3) as in any one of the above claims, comprising the first side wall (9) of which the edge connected to the at least one inlet port (12) has a flat surface and of which the edge joined with the lower wall (6) has a curved structure or a convex structure towards the lower wall (6).

11. A separation tank (3) as in any one of the above claims, comprising the lower wall (6) which extends by expanding at a certain angle from the edge thereof connected to the first side wall (9) towards the edge thereof connected to the second side wall (10) in order to enable the water separated in the chamber (11) to be discharged.

12. An oven (1) comprising a separation tank (3) as in any one of Claims 1 to 12.

13. An oven (1) as in Claim 12, **characterized by** a separation tank (3) which is positioned at a level higher than a steam generator (2) and a water tank (4), which are positioned longitudinally and vertically so as to be parallel to each other, which is connected to the steam generator (2) by means of at least one inlet port (12), and to the water tank (4) by means of at least one water discharge port (14), and which separates the water and steam coming from the steam generator (2).
